# EUROPEAN PATENT SPECIFICATION

(11) **EP 3 384 778 B1**
(45) Date of publication and mention of the grant of the patent: **14.10.2020**
(21) Application number: 18165554.9
(22) Date of filing: 03.04.2018
(51) Int. Cl.: A22B 3/02

(54) **DEVICE FOR USE IN THE HUMANE SLAUGHTER OF ANIMALS**
VORRICHTUNG ZUR VERWENDUNG BEIM HUMANEN SCHLACHTEN VON TIEREN
DISPOSITIF DESTINÉ À L'ABATTAGE SANS CRUAUTÉ DES ANIMAUX

(30) Priority: 04.04.2017 GB 201705386
(43) Date of publication of application: 10.10.2018
(73) Proprietor: Accles & Shelvoke Limited, Sutton Coldfield, West Midlands B76 1AL (GB)
(72) Inventor: HOLLAND, Joseph Eugene, Sutton Coldfield, West Midlands B76 1AL (GB)
(74) Representative: Barker Brettell LLP

(56) References cited:
- EP-A2- 2 706 341
- US-A1- 2003 156 272
- US-B2- 8 973 565

## Description

This invention relates a device for use in the humane slaughter of animals, and in particular a device used to stun an animal prior to slaughter.

In such devices a captive bolt housed in a barrel is driven along the barrel by application of a driving force, which may be explosive, pneumatic or hydraulic. The bolt is returned by a return mechanism such as resilient means deformed on the driving stroke.

A device is routinely calibrated to suit the type of animal to be stunned, usually by altering the driving force or the stroke of the bolt, to provide a given velocity of the bolt at the end of the stroke so that the momentum of the bolt is sufficient to stun the animal. It is important that the device operates consistently. Inconsistent operation has two main causes. The first is that the bolt is not returned to its starting position, which means that the effect of the driving force is reduced, so that the bolt may not reach the end of the stroke or the required velocity. The second is that the driving force is insufficient or the interaction of the bolt and barrel is suboptimal, so that the velocity of the bolt is reduced. It is therefore recommended that the operation of the device is checked periodically, but this requires the device to be removed from service and fired into a measuring device to check it. This is a time-consuming and inefficient process where the device is used in an environment requiring rapid throughput. EP 2 706 341A shows a test rig which measures the time taken for the bolt to travel a pre-determined distance and generates a signal representative of the condition of the device.

According to the invention, we provide a device for use in the humane slaughter of animals according to claim 1, having a barrel in which a captive bolt is received for reciprocal axial movement, the bolt being driven out of the barrel by a driving force in an operating stroke, and in the opposite direction by a return mechanism in a return stroke, the barrel being provided with at least two axially spaced sensors operative to sense passage of the bolt, and a control unit having microprocessor means for receiving signals from the sensors and adapted to calculate the velocity of the bolt in operation, the velocity being calculated on the operating stroke and the return stroke.

The invention therefore provides for measurement of the velocity of the bolt on the device as it is being used, so that it does not need to be taken out of service to be checked. It enables the velocity to be measured on the operating stroke and the return stroke. It also removes the need to provide a separate test rig.

Preferably the microprocessor means generates a signal indicating suboptimal operation if the velocity of the bolt is outside a predetermined range. The device is therefore monitored continuously, so that early warning of suboptimal operation is available.

The device preferably has two sensors. These are conveniently provided at the rear of the barrel. Each sensor senses when the tail of the bolt passes it, and sends a signal to the microprocessor means.

The microprocessor means may include a memory, a timing circuit and a processing circuit. The distance between the sensors is stored in the memory, the timing circuit calculates the time elapsing between the signals received from successive sensors, and the processing circuit calculates the velocity of the bolt using the distance and elapsed time. The calculated velocity may then also be stored in the memory.

The operating stroke velocity will indicate whether the driving force is sufficient to provide the required momentum at the end of the stroke. It may also indicate that the interaction of the bolt and barrel is suboptimal. The return stroke velocity will indicate whether the bolt is likely to be returned to its starting position. Conveniently, the location of the rearward sensor may be chosen so that it is able to detect whether or not the bolt has returned to its starting position. If the bolt passes the sensor it will have returned. However, if the bolt stops at or before the sensor it will not have returned. If the bolt stops at the sensor the sensor signal will be continuous, and if it stops before the sensor then there will be no signal from the sensor. The processing circuit will be arranged to detect either of these possibilities and provide an appropriate output.

The microprocessor means may also store a set of parameters for the proper operation of the device for each of the different types of animal. The correct set may be chosen by the user. If the operation is outside the parameters the microprocessor means may be arranged to provide a signal to the user. This provides the ability for the veterinary practitioner to monitor the operation of the tool in real time, thus improving animal welfare.

The microprocessor means may instead be connected to a remote device, such as a personal computer, tablet computer, mobile phone or the like, which stores the data and parameters and generates the signal indicating suboptimal operation. The connection may be physical or wireless. The remote device may then be used to set the parameters. The suboptimal operation signal may be audible or visual. Where a remote device is used, the data from the device may be monitored continuously.

The sensors may be of any appropriate type. Conveniently, Hall Effect sensors are used, but optical sensors could also be employed.

The sensors are preferably mounted in radial apertures on the top of the barrel. The microprocessor means may then be mounted in a housing on the top of the barrel. This has the advantage that there is no interference with the normal use of the device.

An embodiment of the invention is illustrated, by way of example only, in the accompanying drawings, in which:-
**Figure 1** is a perspective view, part cut away, of a prior art device for use in the humane slaughter of animals;
**Figure 2** is a an axial section through part of a device according to the invention in an inoperative position; and
**Figure 3** is similar to Figure 2 but shows the device after operation.

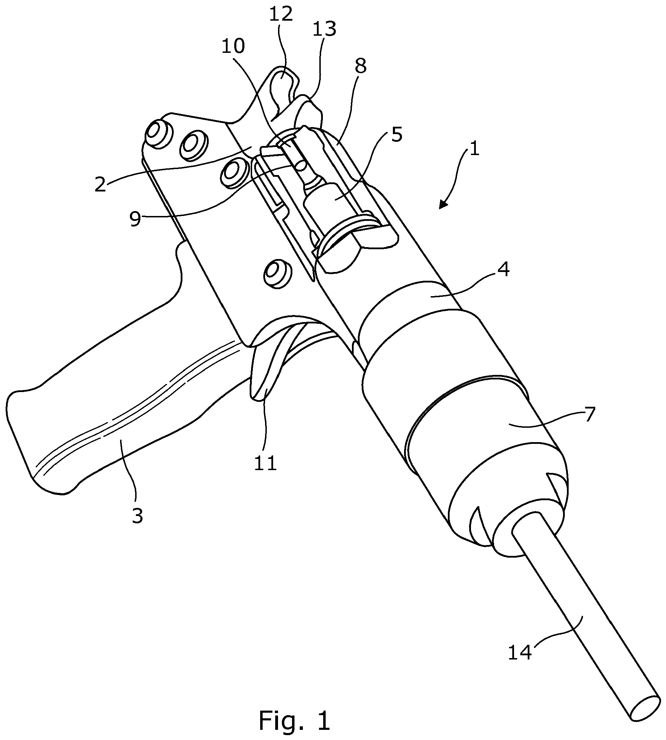

Figure 1 shows a known device 1 for use in the humane slaughter of animals. It is a captive bolt device used to stun an animal.

The device 1 comprises a body 2 mounted on a handle 3. The body 2 has a barrel 4 in which a captive bolt 5 is received for reciprocal axial movement. The barrel 4 is closed at its forward end 6 by a muzzle cap 7, and at its rearward end 8 has a chamber 9 receiving an explosive cartridge 10 which provides the force for driving the bolt 5 forwards. The cartridge 10 is fired by pulling a trigger 11 on the handle 3. The trigger 11 activates a hammer 12 which in turn acts on a firing block 13 for the cartridge 10. Explosion of the cartridge 10 drives the bolt 5 forwards out of the barrel 4 in an operating stroke. Figure 1 shows the forward end 14 of the bolt 5 at the end of the operating stroke. The bolt 5 is returned to its starting position by a return mechanism comprising resilient recuperator sleeves (not shown in Figure 1) which are deformed on the operating stroke. The spent cartridge 10 is extracted by drawing back the hammer 12 and firing block 13, and the device 1 may then be reloaded ready for the next operation.

As mentioned above, the device 1 is calibrated to suit the type of animal to be stunned, usually by altering the driving force or the stroke of the bolt, to provide a given velocity of the bolt at the end of the stroke so that the momentum of the bolt is sufficient to stun the animal. It is important that the device operates consistently. Inconsistent operation has two main causes. The first is that the bolt is not returned to its starting position, which means that the effect of the driving force is reduced, so that the bolt may not reach the end of the stroke or the required velocity. The second is that the driving force is insufficient or the interaction of the bolt and barrel is suboptimal, so that the velocity of the bolt is reduced.

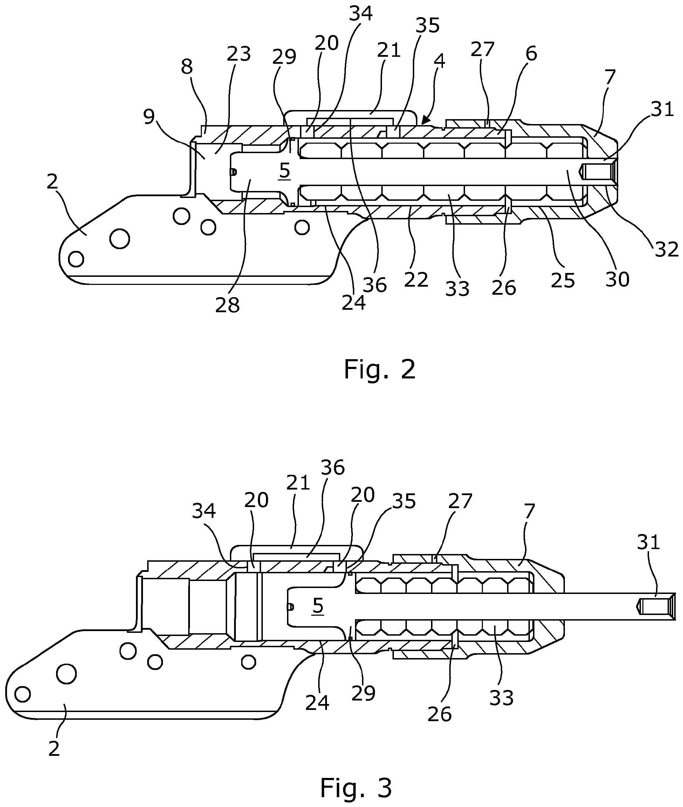

Figures 2 and 3 show axial sections through the body 2 of the device of Figure 1, modified to include sensors 20 and a control unit 21 according to the invention. Corresponding reference numerals have been applied to corresponding parts.

Figures 2 and 3 show the body 2 in more detail. The barrel 4 has a stepped bore 22, with a rear chamber 23 for the cartridge 10 (not shown in Figures 2 and 3) leading to a portion 24 of larger diameter in which the bolt 5 is accommodated. The barrel 4 is closed at its forward end 6 by the muzzle cap 7 which screws onto the external surface of the barrel 4 and provides a continuation 25 of the bore portion 24. A washer 26 provides a seal between the barrel 4 and the muzzle cap 7, and a radial aperture 27 in the cap 7 provides a breather port for the bore 23, as explained in more detail below.

The bolt 5 is of stepped outline, having a rear portion 28 of intermediate diameter, an enlarged flange 29 working in the bore portion 23, and a forward portion 30 of smaller diameter. In the inoperative position shown in Figure 2 the forward end 31 of the forward portion 30 is located in an axial aperture 32 in the muzzle cap 7. The forward portion 30 is driven out of the barrel 4, to the position shown in Figure 3, to provide the stunning force.

Figures 2 and 3 show the return mechanism in the form of recuperator sleeves 33 mounted on the forward portion 30 and held between washers (not shown) at the rearward and forward ends. There are eight recuperator sleeves 33 shown, made of rubber or other resilient material. The sleeves 33 are compressed on the operating stroke, as shown in Figure 3, and provide the force to return the bolt 5 to the starting position of Figure 2.

The body 2 has two axially spaced radial apertures 34, 35 opening into the bore portion 23. The apertures 34, 35 are provided on the top of the body 2. The rearward aperture 34 is placed just forward of the starting position of the flange 29 of the bolt 5, while the forward aperture 35 is approximately half-way along the bore portion 23, at a predetermined distance from the aperture 34. Each aperture 34, 35 houses a Hall effect sensor 20. The control unit 21 is mounted on the external surface of the body 2 to seal the outer end of the apertures 34, 35. It houses a microprocessor 36, shown only schematically. The microprocessor is able to receive signals from the sensors 20, and includes a memory means, a timing means and a processing means. The memory means stores at least the predetermined distance between the two sensors. It also has a communication means enabling it to communicate wirelessly with a remote device (not shown) such as a personal computer, mobile phone or the like.

It will be appreciated that when the flange 29 passes a sensor 20, the sensor 20 will produce a signal of a given duration, which is received by the microprocessor 36. The timing means measures the elapsed time between signals from successive sensors 20. As the distance between the sensors 20 is predetermined and stored in the memory means, the processing means calculate a velocity representing a velocity of the bolt 5 as it moved between the sensors 20. The velocity calculated is stored in the memory means or transmitted to the remote device to be stored. The velocity is calculated on the operating stroke and the return stroke.

The velocity calculated on the operating stroke is related to the velocity of the bolt 5 at the end of the operating stroke, and thus the momentum of the bolt 5 and the stunning force. It is therefore possible to set parameters for the operating stroke velocity calculated by the control unit 21 to define acceptable limits for the required stunning force. The parameters may be stored in the memory of the control unit 21 or in the remote device.

The velocity calculated on the return stroke indicates whether the bolt 5 will return to its starting position. It is therefore possible to set parameters for the return stroke velocity to define acceptable starting positions. It will be appreciated that, if the bolt 5 does not return to an acceptable starting position the flange 29 will either fail to clear the rearward sensor 20 or fail to reach it at all. If it fails to clear the rearward sensor 20 the signal from that sensor 20 will not cut off. The microprocessor 36 will detect this, and is programmed to provide an appropriate fail output. Similarly, if the flange 29 fails to reach the rearward sensor 20 no signal will be generated to be received by the microprocessor 36. The microprocessor will detect this and is programmed to provide an appropriate fail output. The fail outputs will also be stored on the control unit 21 or transmitted to the remote device.

The sensors 20 and control unit 21 enable each operation of the device 1 to be monitored and a comparison made between the data generated and the parameters. If the data is outside the parameters for acceptable operation the control unit 21 or the remote device will generate an indication, such as an audible or visual alarm. The device 1 can then be taken out of service for maintenance.

For use, the user will determine the stunning force required for the type of animal. The power of the cartridge 10 and/or the stroke of the bolt 5 will be chosen accordingly. The user will also set the appropriate parameters on the control unit 21 or the remote device.

With the bolt 5 in the starting position of Figure 2, the user loads and fires the device 1. The bolt 5 is driven forwards axially out of the barrel 4 and muzzle cap 7, compressing the recuperator sleeves 33. The breather port 27 allows air forward of the flange 29 to be expelled from the bore portion 23 to avoid a pressure build up. The control unit 21 calculates the velocity from the sensor signals generated as the flange 29 passes the sensors 20 in succession. The velocity is stored and/or sent to the remote device. The control unit 21 or the remote device may display the velocity. The recuperator sleeves 33 then return the bolt 5 to its starting position. The control unit 21 again calculates the velocity, and stores it or sends it to the remote device. It may also be displayed.

The user then extracts the spent cartridge 10, reloads and fires as before. Each operation is monitored in real time. If the velocity on the operating stroke falls below the acceptable value the control unit 21 or the remote device indicates a fault, such as by an audible or visual alarm. Similarly, if a fault is detected on the return stroke, this is indicated.

The operation of the device 1 is therefore monitored, so that consistent operation is assured, but without requiring the device to be taken out of service for checking.

## Claims

1. A device (1) for use in the humane slaughter of animals has a barrel (4) in which a captive bolt (5) is received for reciprocal axial movement, the bolt (5) being driven out of the barrel (4) by a driving force in an operating stroke, and in the opposite direction by a return mechanism (33) in a return stroke, **characterised in that** the barrel (4) is provided with at least two axially spaced sensors (20) operative to sense passage of the bolt (5), and a control unit (21) having microprocessor means (36) for receiving signals from the sensors (20) and adapted to calculate the velocity of the bolt (5) in operation, the velocity being calculated on the operating stroke and the return stroke.

2. A device as claimed in claim 1, in which the microprocessor means (36) generates a signal indicating suboptimal operation if the velocity of the bolt (5) is outside a predetermined range.

3. A device as claimed in claim 1 or claim 2, in which two sensors (20) are provided.

4. A device as claimed in claim 3, in which the sensors (20) are provided at the rear of the barrel (4), with each sensor (20) sensing when the tail (29) of the bolt (5) passes it, and sending a signal to the microprocessor means (36).

5. A device as claimed in any preceding claim, in which the microprocessor means (36) includes a memory, a timing circuit and a processing circuit, such that the distance between the sensors (20) is stored in the memory, the timing circuit calculates the time elapsing between the signals received from successive sensors, and the processing circuit calculates the velocity of the bolt (5) using the distance and elapsed time.

6. A device as claimed in claim 5, in which the calculated velocity is also stored in the memory.

7. A device as claimed in any preceding claim, in which the location of the rearward sensor (20) is chosen so that it is able to detect whether or not the bolt (5) has returned to its starting position.

8. A device as claimed in any preceding claim, in which the microprocessor means (36) stores a set of parameters for the proper operation of the device for each of the different types of animal.

9. A device as claimed in any preceding claim, in which the microprocessor means (36) is connected to a remote device, such as a personal computer, tablet computer, mobile phone or the like, which stores the data and parameters and generates a signal indicating suboptimal operation and in which the connection is physical or wireless.

10. A device as claimed in claim 9, in which the remote device is used to set the parameters.

11. A device as claimed in claim 9 or claim 10, in which the suboptimal operation signal is audible or visual.

12. A device as claimed in any of claims 9 to 11, in which the data from the device (1) is monitored continuously by the remote device.

13. A device as claimed in any preceding claim, in which the sensors (20) are mounted in radial apertures (34, 35) on the top of the barrel (4).

14. A device as claimed in any preceding claim, in which the microprocessor means (36) is mounted in a housing (21) on the top of the barrel (4).

15. A device as claimed in any preceding claim, in which the sensors (20) are Hall Effect sensors or optical sensors.

## Patentansprüche

1. Vorrichtung (1) zur Verwendung bei der humanen Schlachtung von Tieren, die einen Lauf (4) aufweist, in dem ein Bolzen (5) zur reziproken Axialbewegung aufgenommen ist, wobei der Bolzen (5) von einer Antriebskraft in einem Vorlauf aus dem Lauf (4) herausgetrieben wird und in einem Rücklauf in die entgegengesetzte Richtung von einem Umkehrmechanismus (33) angetrieben wird, **dadurch gekennzeichnet, dass** der Lauf (4) mit mindestens zwei axial beabstandeten Sensoren (20), die dazu funktionsfähig sind, das Passieren des Bolzens (5) zu erfassen, und einer Steuereinheit (21) versehen ist, die eine Mikroprozessoreinrichtung (36) zum Empfang von Signalen von den Sensoren (20) aufweist und dazu eingerichtet ist, die Geschwindigkeit des Bolzens (5) im Betrieb zu berechnen, wobei die Geschwindigkeit beim Vorlauf und Rücklauf berechnet wird.

2. Vorrichtung nach Anspruch 1, wobei die Mikroprozessoreinrichtung (36) ein Signal erzeugt, das den suboptimalen Betrieb anzeigt, wenn die Geschwindigkeit des Bolzens (5) außerhalb eines festgelegten Bereichs liegt.

3. Vorrichtung nach Anspruch 1 oder Anspruch 2, wobei zwei Sensoren (20) vorgesehen sind.

4. Vorrichtung nach Anspruch 3, wobei die Sensoren (20) am hinteren Ende des Laufs (4) vorgesehen sind, wobei jeder Sensor (20) erfasst, wenn ihn das hintere Ende (29) des Bolzens (5) passiert, und ein Signal an die Mikroprozessoreinrichtung (36) sendet.

5. Vorrichtung nach einem der vorstehenden Ansprüche, wobei die Mikroprozessoreinrichtung (36) einen Speicher, eine Zeitschaltung und eine Verarbeitungsschaltung umfasst, sodass der Abstand zwischen den Sensoren (20) im Speicher gespeichert wird, wobei die Zeitschaltung die Zeit berechnet, die zwischen den von aufeinanderfolgenden Sensoren empfangenen Signalen verstreicht, und die Verarbeitungsschaltung die Geschwindigkeit des Bolzens (5) unter Verwendung der Entfernung und verstrichenen Zeit berechnet.

6. Vorrichtung nach Anspruch 5, wobei die berechnete Geschwindigkeit ebenfalls im Speicher gespeichert wird.

7. Vorrichtung nach einem der vorstehenden Ansprüche, wobei die Position des hinteren Sensors (20) so gewählt ist, dass dieser erfassen kann, ob der Bolzen (5) in seine Ausgangsstellung zurückgekehrt ist.

8. Vorrichtung nach einem der vorstehenden Ansprüche, wobei die Mikroprozessoreinrichtung (36) einen Satz Parameter für den korrekten Betrieb der Vorrichtung für jede der verschiedenen Tierarten speichert.

9. Vorrichtung nach einem der vorstehenden Ansprüche, wobei die Mikroprozessoreinrichtung (36) mit einer externen Vorrichtung, zum Beispiel einem Personal Computer, einem Tablet-Computer, einem Mobiltelefon o. ä., verbunden ist, die die Daten und Parameter speichert und ein Signal erzeugt, das den suboptimalen Betrieb anzeigt, und wobei die Verbindung physisch oder kabellos ist.

10. Vorrichtung nach Anspruch 9, wobei die externe Vorrichtung dazu verwendet wird, die Parameter einzustellen.

11. Vorrichtung nach Anspruch 9 oder Anspruch 10, wobei das Signal für den suboptimalen Betrieb akustisch oder visuell ist.

12. Vorrichtung nach einem der Ansprüche 9 bis 11, wobei die Daten von der Vorrichtung (1) von der externen Vorrichtung durchgehend überwacht werden.

13. Vorrichtung nach einem der vorstehenden Ansprüche, wobei die Sensoren (20) in radialen Öffnungen (34, 35) oben auf dem Lauf (4) montiert sind.

14. Vorrichtung nach einem der vorstehenden Ansprüche, wobei die Mikroprozessoreinrichtung (36) in einem Gehäuse (21) oben auf dem Lauf (4) montiert ist.

15. Vorrichtung nach einem der vorstehenden Ansprüche, wobei die Sensoren (20) Hallsensoren oder optische Sensoren sind.

## Revendications

1. Dispositif (1) destiné à être utilisé pour l'abattage sans cruauté d'animaux ayant un canon (4) dans lequel un projectile captif (5) est reçu pour un mouvement de va-et-vient axial, le projectile (5) étant entraîné hors du canon (4) par une force d'entraînement lors d'une course de fonctionnement, et dans la direction opposée par un mécanisme de retour (33) lors d'une course de retour, **caractérisé en ce que** le canon (4) est muni d'au moins deux capteurs espacés axialement(20), fonctionnant pour détecter un passage du projectile (5), et d'une unité de commande (21) ayant un moyen de microprocesseur (36) destiné à recevoir des signaux en provenance des capteurs (20) et adapté pour calculer la vitesse du projectile (5) en fonctionnement, la vitesse étant calculée sur la course de fonctionnement et la course de retour.

2. Dispositif selon la revendication 1, dans lequel le moyen de microprocesseur (36) génère un signal indiquant un fonctionnement sous-optimal si la vitesse du projectile (5) est en dehors d'une plage prédéterminée.

3. Dispositif selon la revendication 1 ou la revendication 2, dans lequel deux capteurs (20) sont fournis.

4. Dispositif selon la revendication 3, dans lequel les capteurs (20) sont fournis à l'arrière du canon (4), chaque capteur (20) détectant le passage de la queue (29) du projectile (5) et envoyant un signal au moyen de microprocesseur (36).

5. Dispositif selon l'une quelconque des revendications précédentes, dans lequel le moyen de microprocesseur (36) comprend une mémoire, un circuit de synchronisation et un circuit de traitement, de sorte que la distance entre les capteurs (20) est stockée dans la mémoire, le circuit de synchronisation calcule le temps qui s'écoule entre les signaux reçus en provenance des capteurs successifs et le circuit de traitement calcule la vitesse du projectile (5) en utilisant la distance et le temps écoulé.

6. Dispositif selon la revendication 5, dans lequel la vitesse calculée est également stockée dans la mémoire.

7. Dispositif selon l'une quelconque des revendications précédentes, dans lequel l'emplacement du capteur arrière (20) est choisi de façon à lui permettre de détecter si le projectile (5) est revenu ou non à sa position de départ.

8. Dispositif selon l'une quelconque des revendications précédentes, dans lequel le moyen de microprocesseur (36) stocke un ensemble de paramètres pour le bon fonctionnement du dispositif pour chacun des différents types d'animaux.

9. Dispositif selon l'une quelconque des revendications précédentes, dans lequel le moyen de microprocesseur (36) est connecté à un dispositif distant, tel qu'un ordinateur personnel, un ordinateur tablette, un téléphone mobile ou un élément similaire, qui stocke les données et les paramètres et génère un signal indiquant un fonctionnement sous-optimal et dans lequel la connexion est physique ou sans fil.

10. Dispositif selon la revendication 9, dans lequel le dispositif distant est utilisé pour régler les paramètres.

11. Dispositif selon la revendication 9 ou la revendication 10, dans lequel le signal de fonctionnement sous-optimal est audible ou visuel.

12. Dispositif selon l'une quelconque des revendications 9 à 11, dans lequel les données en provenance du dispositif (1) sont surveillées de manière continue par le dispositif distant.

13. Dispositif selon l'une quelconque des revendications précédentes, dans lequel les capteurs (20) sont montés dans des ouvertures radiales (34, 35) sur le dessus du canon (4).

14. Dispositif selon l'une quelconque des revendications précédentes, dans lequel le moyen de microprocesseur (36) est monté dans un boîtier (21) sur le dessus du canon (4).

15. Dispositif selon l'une quelconque des revendications précédentes, dans lequel les capteurs (20) sont des capteurs à effet Hall ou des capteurs optiques.
